# DEMANDE DE BREVET EUROPEEN

(11) **EP 0 720 082 A1**
(43) Date de publication de la demande: **03.07.1996**
(21) Numéro de dépôt: 95402578.9
(22) Date de dépôt: 17.11.1995
(51) Int. Cl.: G06F 3/023, G06F 3/033

(54) **Procédé pour la réalisation et la modification d'un dessin sur l'écran de visualisation d'un terminal**

(30) Priorité: 28.12.1994 FR 9415766
(71) Demandeur: SEXTANT AVIONIQUE (Société Anonyme), F-78141 Velizi Villacoublay (FR)
(72) Inventeur: Gaultier, Philippe, F-78150 Le Chesnay (FR); Vouillon, Patrick, F-91140 Villebon sur Yvette (FR); Simon, Frédéric, F-78550 Elancourt (FR)
(74) Mandataire: de Saint-Palais, Arnaud Marie

(57) **Abrégé**

Pour la réalisation et la modification d'un dessin sur l'écran de visualisation (2) d'un terminal (11) comprenant un manipulateur (6), le procédé selon l'invention comporte une opération de désignation d'un objet ou d'une forme (48) appartenant audit dessin, cette opération de désignation comprenant l'affichage en surimpression sur ledit dessin, d'un axe (47) traversant ledit écran (2), l'orientation grâce au manipulateur (6) de l'axe (47) dans une direction de manière à intercepter l'objet (48) à désigner, la singularisation d'un objet parmi les objets (48,51) interceptés par ledit axe (47), la singularisation successive des objets (48,51) se trouvant dans la direction sélectionnée à la suite d'une commande appliquée audit manipulateur (6), jusqu'à ce que l'objet à désigner (48) soit singularisé, et la validation de l'objet singularisé (48).

## Description

La présente invention concerne un procédé pour la réalisation et la modification d'un dessin sur l'écran de visualisation d'un terminal d'ordinateur.

Elle s'applique notamment, mais non exclusivement, aux outils de dessin et de conception assistés par ordinateur permettant, au cours d'un dialogue homme/processeur, de dessiner sur un écran de visualisation des formes d'objets ou des plans. Un tel dialogue fait intervenir généralement l'affichage à l'écran d'un curseur que l'opérateur doit déplacer pour désigner des emplacements de l'écran.

De nombreuses solutions ont donc été proposées pour permettre à l'opérateur notamment de commander les déplacements du curseur et de tracer et modifier des formes à l'écran.

Or, parmi ces solutions, celles qui sont les plus répandues à l'heure actuelle, telles que les touches de direction prévues sur le clavier, les souris, les "trackballs" et les tables graphiques, ne conviennent pas bien, ou même sont prohibées dans certaines applications.

Ainsi, la souris et la tablette à digitaliser exigent pour leur fonctionnement une grande surface plane et horizontale.
Le "trackball" qui fait intervenir une sphère que l'opérateur fait tourner du doigt, s'avère peu pratique et présente une précision insuffisante pour réaliser des dessins de qualité, notamment dans le cas où l'on souhaite réaliser les plans de pièces qui seront ensuite utilisés par des outils de fabrication automatisés.

Pour supprimer ces inconvénients, on a également proposé des tablettes tactiles aptes à détecter les déplacements d'un doigt de l'opérateur pour guider le curseur affiché sur l'écran.
Toutefois, ces tablettes tactiles qui sont, au demeurant très performantes, présentent l'inconvénient de nécessiter une surface utile relativement importante.

L'invention a donc pour but de supprimer ces inconvénients grâce à un procédé faisant intervenir un terminal de communication homme/processeur, compact et ergonomique, comprenant un écran de visualisation, et un manipulateur manoeuvrable quelle que soit l'orientation de la main, et permettant cependant d'obtenir une grande précision.

Pour parvenir à ces résultats, dans le but de réaliser et modifier un dessin affiché sur ledit écran, ce procédé est caractérisé en ce qu'il comprend une opération de désignation d'un objet ou d'une forme appartenant audit dessin en vue de modifier celle-ci, cette opération de désignation comprenant les étapes suivantes :
- l'affichage en surimpression sur ledit dessin, d'un axe traversant ledit écran et mobile en rotation de manière à pouvoir balayer l'ensemble de l'écran,
- l'orientation de l'axe dans une direction de manière à intercepter l'objet à désigner, par une première action de commande manuelle appliquée audit manipulateur,
- la singularisation d'un objet parmi les objets interceptés par ledit axe, en modifiant son aspect,
- la singularisation successive des objets se trouvant dans la direction sélectionnée à la suite d'une seconde action de commande manuelle appliquée audit manipulateur, jusqu'à ce que l'objet à désigner soit singularisé, et la sélection de l'objet singularisé par une troisième action de commande manuelle.

De cette manière toutes les formes du dessin affiché à l'écran peuvent être désignées très facilement, en faisant intervenir un nombre minimum d'actions de l'opérateur, ces actions étant effectuées sur une surface utile minimum, en tout cas, bien inférieure à celle requise par une souris ou une tablette à digitaliser. Ces actions peuvent en outre être effectuées sans tâtonnement, seuls les formes ou objets affichés à l'écran pouvant ainsi être désignés.

Avantageusement, ledit axe peut pivoter autour d'un des ses points situé sensiblement dans un coin de l'écran.

Ainsi, toute la surface de l'écran peut être balayée par ledit axe en un quart de tour.

Avantageusement, l'orientation de l'axe consiste en l'entraînement en rotation d'un élément de commande rotatif dudit manipulateur, dont le pivotement entraîne celui de l'axe affiché sur l'écran.

Selon un premier mode d'exécution préféré de l'invention, la seconde action de commande manuelle consiste à faire tourner légèrement l'élément rotatif du manipulateur.

Selon un second mode d'exécution préféré de l'invention, la seconde action de commande manuelle consiste en une pression exercée sur ledit élément de commande du manipulateur.

Un mode de réalisation du procédé selon l'invention sera décrit ci-après, à titre d'exemple non limitatif, avec référence aux dessins annexés dans lesquels :
La figure 1 représente schématiquement un exemple de terminal mis en oeuvre par le procédé selon l'invention ;
La figure 2 montre en détail un manipulateur du terminal, particulièrement adapté à la réalisation d'un dessin à l'écran ;
La figure 3 représente en vue de dessus le susdit manipulateur ;
Les figures 4 et 5 sont des vues schématiques en coupe axiale de deux variantes d'exécution du manipulateur ;
Les figures 6 à 10 sont des représentations d'écrans illustrant des séquences de réalisation et de modification d'un dessin.

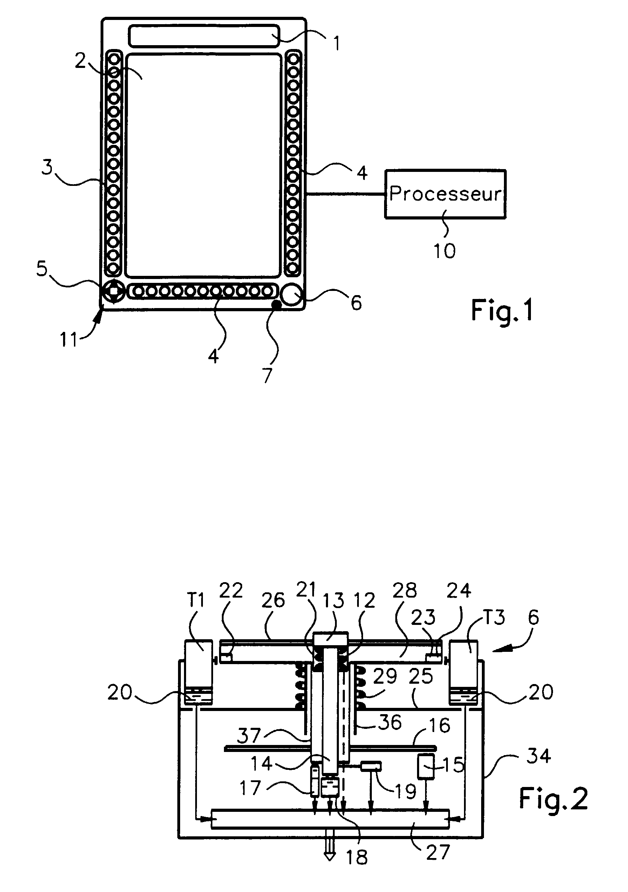

Le terminal de communication homme/machine 11 mis en oeuvre par le procédé selon l'invention représenté sur la figure 1 a été particulièrement conçu pour la réalisation et la modification de dessins et de plans sur un écran de visualisation. Ce terminal 11, de forme sensiblement parallélépipédique, est connecté à un processeur 10 et comprend un premier écran de visualisation 1 permettant de visualiser le libellé de la ou des fonctions en cours d'exécution sur le terminal 11. Cet écran présente une forme rectangulaire et est disposé sur une face du terminal 11 le long du bord supérieur. Il est par exemple de type LCD et équipé d'une dalle tactile transparente disposée devant l'écran, de manière à servir en même temps de touches de commande, le libellé de la commande étant affiché sur l'écran.

Le terminal 11 comprend un second écran de visualisation 2 occupant la majeure partie de la susdite face. Cet écran est par exemple constitué d'une matrice de type TFT couleur de 26,5 cm de diagonale et de 640 x 480 pixels. Il peut également être équipé d'une dalle tactile transparente disposée devant l'écran.

Le terminal 11 comprend également trois ensembles de touches disposés respectivement le long des bords inférieur et latéraux gauche et droite du second écran 2. Ces touches présentent avantageusement un double mode de fonctionnement, à savoir un mode de clavier et un mode sensitif lorsque les touches sont simplement effleurées.

Par ailleurs, le terminal 11 comprend un dispositif 5 de gestion d'un curseur disposé dans le coin inférieur gauche de l'écran, ce dispositif 5 comprenant quatre interrupteurs aptes à commander par impulsions le déplacement sur l'écran d'un curseur ou d'un objet dans deux directions, et un manipulateur 6 conçu pour atteindre rapidement et intuitivement un point ou une zone de l'écran et le sélectionner, ce manipulateur étant associé à une touche de validation 7.

Dans l'exemple représenté sur la figure 2, le manipulateur 6 comprend un boîtier 34, de forme parallélépipédique dont la face supérieure 25 est munie d'un palier central vertical 36 dans lequel peut pivoter et coulisser axialement un arbre rotatif tubulaire 37.

Cet arbre rotatif 37 porte, à son extrémité supérieure, un disque rotatif 28 qui s'étend parallèlement à la face supérieure 25.
Le maintien en position axiale de l'ensemble arbre 37 - disque 28 est assuré par un ressort de compression 29 disposé coaxialement entre la face supérieure 25 et le disque 28. Le disque 28 comprend, par ailleurs, une cavité centrale coaxiale 21 qui communique avec le volume intérieur de l'arbre tubulaire 37, et dans laquelle est monté coulissant, avec rappel par ressort 12, un poussoir coaxial 13 solidaire d'une tige 14.

Par ailleurs, le boîtier 34 renferme :
- un détecteur 15 disposé en regard d'une roue codeuse 16 portée par l'arbre tubulaire 37, coaxialement à celui-ci, de manière à délivrer une information relative à la position angulaire du disque rotatif 28,
- un micro-interrupteur 17 disposé sous l'arbre tubulaire 37 de manière à être actionné par celui-ci lorsqu'à la suite d'une pression exercée sur le disque 28, l'arbre 37 se déplace vers le bas contre l'action du ressort 29, au delà d'une course prédéterminée,
- un micro-interrupteur 18 disposé sous l'extrémité de la tige 14 qui ressort de l'extrémité inférieure de l'arbre tubulaire 37, de manière à être actionné à la suite d'une pression exercée sur le poussoir 13, et
- une jauge de contrainte optionnelle 19, placée en parallèle ou en remplacement de l'interrupteur 17, de manière à obtenir un signal proportionnel à la force exercée sur le disque 28.

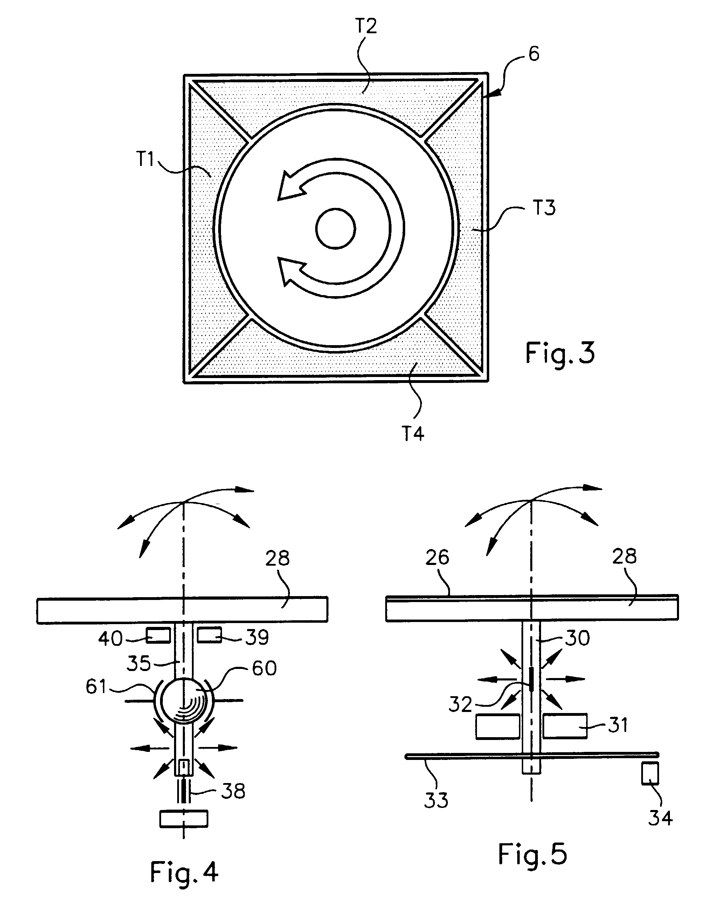

Dans cet exemple (figure 3), la face supérieure 25 du boîtier 34 supporte quatre touches de fonction T1 à T4, de forme trapézoïdale, avec la petite base incurvée, qui occupent l'espace compris entre le disque 28 et les bords latéraux du boîtier 34. Ces touches de fonction T1 à T4 agissent sur des interrupteurs respectifs 20 montés sur la face supérieure 25. L'une de ces touches peut avantageusement servir de touche de validation en remplacement de la touche 7.

La surface cylindrique du disque 28 est munie d'une piste crantée 22 sur laquelle vient porter une bille 23 sollicitée par un ressort 24 en appui sur le boîtier 34, de manière à engendrer une sensation tactile lors de l'entraînement en rotation du disque 28.
La face supérieure du disque 28 peut être recouverte d'une couche tactile apte à déceler la présence d'un doigt ou d'une main à proximité immédiate du disque 28, voire même un effleurement de ce dernier.

Les interrupteurs 17,18,20, le détecteur 15, la jauge de contrainte 19 et la surface tactile 26 sont connectés à un circuit d'interface (non représenté) monté dans le terminal 11 qui assure une mise en forme des signaux délivrés par ces éléments et les transmet sous une forme numérique appropriée vers le processeur 10.

Tel que représenté sur la figure 4, l'arbre 35 sur lequel est porté le disque 28 du manipulateur 6 comprend une portion sphérique 60 rotulant dans des coquilles de formes complémentaires 61 solidaires du boîtier. L'extrémité inférieure de l'arbre 35 est alors accouplée à une jauge de contrainte 38 assurant à la fois la détection de la direction de basculement du disque 28 et la pression exercée dans cette direction. De cette manière, on assure à la fois :
- la détection de l'ordre de déplacement du curseur 41, et
- la détermination de la vitesse de déplacement du curseur 41 le long de l'axe auquel il se trouve lié.

Des butées 39, 40 peuvent être prévues de manière à limiter le basculement de l'arbre 35.

Selon un autre mode d'exécution illustré sur la figure 5, le disque 28 du manipulateur 6, muni de sa surface tactile 26, pourrait être porté par un arbre 30 dont la partie inférieure est montée rotative dans un palier 31 tandis que sa partie supérieure, flexible est équipée d'une jauge de contrainte 32 servant à assurer à la fois la détection de la direction de basculement du disque 28 et la pression exercée dans cette direction.

Dans ce cas, la détection de la position angulaire du disque peut s'effectuer à l'aide d'une roue codeuse 33 et d'un détecteur 34.

Tel que précédemment décrit, le manipulateur 6 permet d'exécuter une multiplicité de fonctions, telles que la réalisation et la modification de dessins et de plans.

Ainsi, par exemple, après avoir activé la fonction de dessin, l'opérateur a la possibilité de choisir à l'aide des touches, par exemple, situées dans la colonne à gauche de l'écran de visualisation 2, l'une des fonctions suivantes :
- le déplacement d'un curseur,
- le tracé d'un objet ou d'une forme tel qu'une ligne, un rectangle, un arc de cercle ou une ellipse, et
- la sélection d'un ou plusieurs objets en vue de les déplacer ou de les modifier.

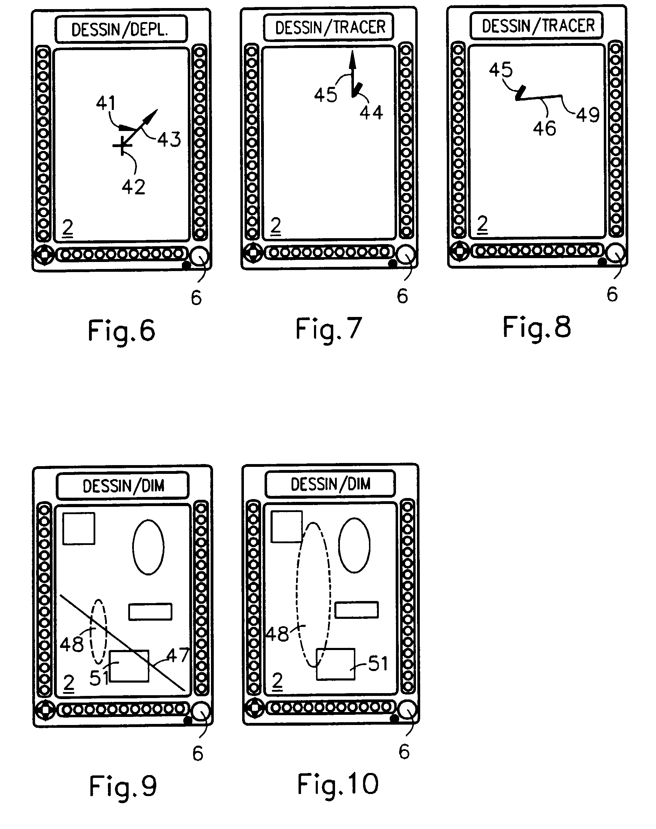

Si l'on sélectionne la fonction de déplacement d'un curseur (figure 6), un curseur 41 apparaît à l'écran 2. Ce curseur 41 se compose d'une croix 42 indiquant une position sur la feuille de dessin dont au moins une partie est affichée à l'écran, et d'une flèche 43 indiquant une direction.
L'opérateur a ainsi la possibilité d'orienter la flèche 43 sur 360° en faisant par exemple tourner le disque rotatif 28 du manipulateur 6. Une fois que l'opérateur a sélectionné une direction et validé cette sélection en exerçant une pression sur le disque rotatif 28, il peut déplacer le curseur dans la direction sélectionnée toujours en faisant tourner le disque rotatif 28 dans un sens ou dans l'autre, provoquant le déplacement du curseur dans un sens ou dans l'autre dans la direction sélectionnée.
Pour revenir à la sélection d'une direction, il suffit de presser à nouveau le disque 28.

L'opérateur peut alors déclencher le tracé d'un objet, tel qu'un segment de droite, un rectangle ou une ellipse, à partir de la position du curseur 41 ainsi sélectionnée, par exemple en sélectionnant la fonction de tracé correspondante, puis en exerçant un double appui sur le disque 28, un nouveau double appui permettant de revenir en mode déplacement du curseur. A cet instant, sur la figure 7 le curseur 41 est remplacé par un symbole représentant un crayon 44 à la pointe duquel part une flèche 45. En faisant tourner le disque 28, l'opérateur peut indiquer la direction de tracé de l'objet du type sélectionné, qu'il valide en exerçant une pression sur le disque 28. Ainsi, si l'on veut tracer un segment de droite 46 (figure 8), il suffit de positionner le curseur 41 sur un point d'extrémité du segment de droite 49, puis de déplacer le crayon 45 dans la direction souhaitée jusqu'à l'autre point d'extrémité. Dans le cas d'un rectangle, il suffit de déplacer le crayon le long d'une des deux diagonales du rectangle, et dans le cas d'une ellipse, le long d'un rayon.
Le déplacement du curseur et le tracé d'un objet peut également être obtenu en utilisant un manipulateur 6 selon le mode d'exécution représenté sur la figure 4 ou 5, la direction du tracé ou du déplacement du curseur étant donnée par la direction de basculement du disque 28, et la vitesse de déplacement ou de tracé, par la pression exercée par le disque 28 dans cette direction.

Si l'opérateur active la fonction de sélection d'un ou plusieurs objets présents sur la feuille de dessin affichée à l'écran 2, en vue de les déplacer ou de les modifier, un axe 47 traversant l'écran apparaît en surimpression sur la feuille de dessin (figure 9). On peut faire tourner cet axe 47 autour d'un de ses points situé par exemple sensiblement dans le coin inférieur droit de l'écran 2 en faisant tourner le disque 28. Pour sélectionner un objet présent sur la feuille de dessin, il suffit d'orienter l'axe 47 de manière à ce qu'il traverse l'objet à sélectionner. Si tel est le cas, l'objet ainsi sélectionné est singularisé, par exemple en changeant la couleur de ses contours. Ainsi par exemple sur la figure 8, l'axe 47 désigne une ellipse 48, dont les contours apparaissent en traits interrompus.

Si l'axe 47 traverse plusieurs objets 51,48, le premier objet 51 en partant du point de rotation de l'axe 47 est singularisé. Si l'opérateur désire sélectionner un autre objet, il lui suffit dans un premier mode d'exécution, de faire légèrement tourner le disque 28, et dans un second mode d'exécution, d'appuyer sur le disque 28, jusqu'à ce que l'objet 48 qu'il désire sélectionner soit singularisé.

Si l'opérateur souhaite sélectionner un ensemble comprenant plusieurs objets, il lui suffit, par exemple, d'enfoncer l'une des touches T1 à T4, prévue à cet effet, en même temps qu'il appuie sur le disque 28 pour sélectionner un autre objet traversé par l'axe 47, ou en même temps qu'il fait tourner l'axe 47 pour désigner un autre objet. De cette manière, le ou les objets précédemment sélectionnés restent singularisés. En fin de sélection, l'opérateur doit valider en appuyant par exemple sur l'une des touches T1 à T4 prévue à cet effet.

De cette manière, tous les objets affichés à l'écran peuvent être désignés très simplement et très rapidement, à l'aide d'un nombre minimum de manipulations.

Lorsqu'un ensemble d'objets ou de formes est ainsi sélectionné, l'opérateur peut choisir une opération à appliquer à celui-ci, telle que par exemple :
- un déplacement en translation dans une direction à sélectionner,
- une rotation,
- une modification de la taille (transformation homothétique), et
- une déformation dans une direction à sélectionner.

Si l'opérateur choisit un déplacement en translation ou une déformation dans une direction de l'ensemble précédemment sélectionné, un curseur tel que 41 apparaît au centre de l'ensemble.
Il lui suffit alors de sélectionner comme précédemment, une direction et une longueur de déplacement ou de déformation. Ces opérations peuvent également être réalisées à l'aide d'un manipulateur 6, tel que celui représenté sur la figure 4 ou 5. Dans ce cas, pour déplacer en translation ou agrandir l'objet dans une certaine direction, il suffit de presser le disque 28 dans la direction souhaitée, jusqu'à ce que l'on obtienne le déplacement ou la déformation souhaitée.

Si l'opérateur choisit d'appliquer à l'ensemble sélectionné une rotation ou de modifier sa taille, il lui suffit pour cela de faire tourner le disque 28 de manière à sélectionner un angle de rotation ou, respectivement un rapport grossissement ou de réduction. Au cours de la rotation du disque 28, l'ensemble sélectionné tourne autour de son centre dans la direction de rotation du disque 28, ou respectivement croît, comme montré figure 10, ou décroît suivant le sens de rotation appliqué au disque 28.

Une fois que l'ensemble sélectionné a atteint la position, la forme ou la taille souhaitée, l'opérateur doit valider cette modification du dessin en actionnant l'une des touches T1 à T4 prévue à cet effet, ce qui provoque la disparition de la singularisation des objets de l'ensemble sélectionné.

Grâce à ce procédé, il est possible d'effectuer un grand nombre d'opérations de dessin avec une grande simplicité, uniquement en utilisant le manipulateur 6.

## Revendications

1. Procédé pour la réalisation et la modification d'un dessin sur l'écran de visualisation d'un terminal (11) de communication homme/processeur compact et ergonomique, comprenant un écran de visualisation (2), et un manipulateur (6) manoeuvrable quelle que soit l'orientation de la main,
caractérisé en ce qu'il comprend une opération de désignation d'un objet ou d'une forme (48) appartenant audit dessin en vue de modifier ceux-ci, cette opération de désignation comprenant les étapes suivantes :
- l'affichage en surimpression sur ledit dessin, d'un axe (47) traversant ledit écran (2) et mobile en rotation de manière à pouvoir balayer l'ensemble de l'écran (2),
- l'orientation de l'axe (47) dans une direction de manière à intercepter l'objet (48) à désigner, par une première action de commande manuelle appliquée audit manipulateur (6),
- la singularisation d'un objet parmi les objets (48,51) interceptés par ledit axe (47), en modifiant son aspect,
- la singularisation successive des objets (48,51) se trouvant dans la direction sélectionnée à la suite d'une seconde action de commande manuelle appliquée audit manipulateur (6), jusqu'à ce que l'objet à désigner (48) soit singularisé, et la sélection de l'objet singularisé (48) par une troisième action de commande manuelle.

2. Procédé selon la revendication 1,
caractérisé en ce que l'axe (47) peut pivoter autour d'un des ses points situé sensiblement dans le coin inférieur droit de l'écran (2), à proximité du manipulateur (6).

3. Procédé selon la revendication 1 ou 2,
caractérisé en ce que l'orientation de l'axe (47) consiste en l'entraînement en rotation d'un élément de commande rotatif (28) dudit manipulateur (6), dont le pivotement entraîne celui de l'axe (47) affiché sur l'écran (2).

4. Procédé selon l'une des revendications 1 à 3,
caractérisé en ce que la seconde action de commande manuelle consiste en une pression exercée sur un élément de commande (28) du manipulateur (6).

5. Procédé selon l'une des revendications 1 à 3,
caractérisé en ce que la seconde action de commande manuelle consiste à appliquer une légère rotation à un élément de commande rotatif (28) du manipulateur (6).

6. Procédé selon la revendication 1 ou 2,
caractérisé en ce que la première et la seconde action de commande manuelle consistent en une pression exercée sur un élément de commande (28) du manipulateur (6) dans une direction correspondant à celle que doit indiquer l'axe (47).

7. Procédé selon l'une des revendications précédentes,
caractérisé en ce que la troisième action de commande manuelle consiste en une pression exercée sur un élément de commande de validation (T1 à T4) du manipulateur (6).

8. Procédé selon l'une des revendications précédentes,
caractérisé en ce qu'il comprend une opération de désignation d'un ensemble d'objets (48,51) du dessin, cette opération comportant la désignation successive de tous les objets dudit l'ensemble par une quatrième action de commande manuelle simultanée avec lesdites première et seconde action de commande manuelle, tous les objets ainsi désignés étant singularisés, et la validation de ces désignations par ladite troisième action de commande manuelle.

9. Procédé selon l'une des revendications précédentes,
caractérisé en ce qu'il comprend des opérations de déplacement en translation et de déformation dans une direction d'un objet (48) ou ensemble d'objets préalablement désignés, ces opérations comprenant chacune la sélection d'une direction de déplacement, respectivement de déformation, par une quatrième action de commande manuelle, et la sélection d'une distance de déplacement ou d'une amplitude de déformation par une cinquième action de commande.

10. Procédé selon la revendication 9,
caractérisé en ce que les opérations de déplacement en translation et de déformation dans une direction d'un objet (48) comprennent l'affichage au centre dudit l'objet d'un index indiquant une direction, la sélection d'une direction indiquée par l'index en entraînant en rotation un élément de commande rotatif (28) dudit manipulateur (6), la sélection d'une distance de déplacement ou d'une amplitude de déformation en exerçant une pression sur ledit élément de commande (28), puis à nouveau en entraînant en rotation ledit élément de commande (28).

11. Procédé selon la revendication 9,
caractérisé en ce que les opérations de déplacement en translation et de déformation dans une direction d'un objet comprennent l'application d'une pression sur un élément de commande (28) du manipulateur (6) dans ladite direction, ladite pression donnant la vitesse de déplacement, et respectivement, la vitesse de déformation de l'objet à l'écran.

12. Procédé selon l'une des revendications précédentes,
caractérisé en ce qu'il comprend une opération de rotation sur lui-même de l'objet (48) ou ensemble d'objets préalablement sélectionné, cette opération étant effectuée en entraînant en rotation un élément de commande (28) dudit manipulateur (6).

13. Procédé selon l'une des revendications précédentes,
caractérisé en ce qu'il comprend une opération de modification de la taille de l'objet (48) ou ensemble d'objets préalablement sélectionné, cette opération étant effectuée en entraînant en rotation un élément de commande rotatif (28) dudit manipulateur (6).
